# EUROPÄISCHE PATENTSCHRIFT

(11) **EP 0 383 002 B1**
(45) Veröffentlichungstag und Bekanntmachung des Hinweises auf die Patenterteilung: **22.06.1994**
(21) Anmeldenummer: 90100106.5
(22) Anmeldetag: 04.01.1990
(51) Int. Cl.: C04B 41/63, E04D 1/28, C09D 5/14

(54) **Beschichteter Betondachstein**
Coated concrete roof
Tuile en béton revêtue

(30) Priorität: 16.01.1989 DE 3901073
(43) Veröffentlichungstag der Anmeldung: 22.08.1990
(73) Patentinhaber: BASF Aktiengesellschaft, 67063 Ludwigshafen (DE)
(72) Erfinder: Dotzauer, Bernhard, Dr., D-6701 Maxdorf (DE); Dersch, Rolf, Dr., D-6710 Frankenthal (DE); Vinke, Johannes, Dr., D-6730 Neustadt (DE); Hanciogullari, Harutyun, Dr., D-6943 Birkenau (DE); Schwartz, Manfred, Dr., D-6700 Ludwigshafen (DE); Berg, Volkmar, Dr., D-7523 Graben (DE)

(56) Entgegenhaltungen:
- DE-A- 2 854 107

## Beschreibung

Die vorliegende Erfindung betrifft einen beschichteten Betondachstein mit verbesserten Eigenschaften und ein Verfahren zu seiner Herstellung.

Betondachsteine stellt man aus Mörteln her, deren Konsistenz die endgültige Formgebung ermöglicht. Die Form der Dachsteine bleibt auch während des Härteprozesses, der meist bei Temperaturen zwischen 40 und 100°C erfolgt, erhalten. Betondachsteine neigen zu Kalkausblühungen; diese entstehen durch Reaktion von Calciumhydroxid auf der Oberfläche der Dachsteine mit dem Kohlendioxid aus der Luft. Calciumhydroxid kann während der Aushärtung, aber auch im Wetter auf die Oberfläche der Dachsteine gelangen. Die Folge sind fleckige, unansehnliche Dächer. Die meist durchgefärbten Betondachsteine werden nach der Formgebung, aber vor der Härtung, also als sogenannte "grüne Steine", oberflächlich mit Beschichtungsmassen abgedeckt, die die Kalkausblühungen auf der Oberfläche der Dachdeckungsstoffe verhindern sollen, und werden dann für 6 bis 12 Stunden in Härtekammern, in denen üblicherweise die oben genannten Temperaturen herrschen, gelagert; in dieser Zeit härten sie aus und zugleich trocknet die Beschichtungsmasse. Mitunter wird ein weiterer Auftrag mit Beschichtungsmasse nach der Aushärtung mit anschließender Trocknung vorgenommen.

Sehr breite Verwendung haben bei der Herstellung von Betondachsteinen wäßrige Beschichtungsmassen gefunden, die aus einer Bindemitteldispersion, anorganischen Zuschlagstoffen wie Kreide, Quarzmehl und Eisenoxidpigmenten, Additiven zur Einstellung der gewünschten Mindestfilmbildetemperatur (= MFT), z.B. schwerflüchtigen Estern und Kohlenwasserstoffen oder Weichmachern, sowie aus Pigmentverteilern und Entschäumern entstehen. Die Pigmentvolumenkonzentration (PVK) dieser Beschichtungsmassen liegt bei ca. 40 %.

Als Bindemittel sind beispielsweise Emulsionspolymerisate auf der Basis von n-Butylacrylat bzw. 2-Ethylhexylacrylat und Styrol verwendet worden, wobei die MFT der zugrundeliegenden Polymer-Dispersionen stets bei etwa 20°C und die der Beschichtungssysteme bei etwa 5-8°C lag.

Im Laufe der Zeit wurden Nachteile solcher Beschichtungen offenkundig:
Die für eine sichere und vollständige Filmbildung erforderlichen Additive werden bei der forcierten Trocknung nur unvollständig entfernt und gewährleisten nicht von Anfang an eine ausreichende Calciumionen-Sperre.

Auch besteht in dieser Phase nicht immer die ebenfalls geforderte Sperrwirkung gegen Wasser, so daß in der nicht frostfreien Jahreszeit eine vorzeitige Erosion durch die Frost-Tau-Wechsel-Belastung eintreten kann.

In dieser Hinsicht sind beispielsweise Dächer gefährdet, deren Betondachsteine im Herbst oder Winter hergestellt und kurz danach ausgelegt wurden. Ähnliches trifft für Betondachsteine zu, die wie üblich, verpackt im Freien gelagert wurden, da man nicht ausschließen kann, daß in die Verpackungen Feuchtigkeit durch Schwitzwasser oder als Regen durch undichtige Verpackung gelangen kann.

Es bestand daher die Aufgabe, einen beschichteten Betondachstein zu finden, der unter allen praktisch auftretenden Lager- und Einsatzbedingungen sicher gegen Kalkausblühungen ist, eine verbesserte Sperrwirkung gegen Wasser und einen verbesserten Schutz gegen vorzeitige Zerstörung durch Temperaturwechsel um den Gefrierpunkt hat.

Eine weitere Aufgabe bestand darin, einen Betondachstein zu finden, der algicid ausgerüstet ist, ohne die Umwelt durch Abgabe toxischer Substanzen zu belasten. Schließlich bestand die Aufgabe, ein Verfahren zur Herstellung eines derartigen Betonsteins zu finden, das sich keiner Additive oder Hilfsstoffe bedient, die bei der Entsorgung von Abfällen das Abwasser oder Grundwasser belasten können.

Es wurde nun gefunden, daß ein Betondachstein, der in an sich bekannter weise auf wenigstens einer seiner Oberflächen mit einem gegebenenfalls mit Zuschlagstoffen und/oder Pigmenten gefüllten Film eines Copolymerisats überzogen ist, die oben genannten Anforderungen erfüllt, wenn das Copolymerisat folgende Monomereneinheiten einpolymerisiert enthält:
(a) 0,03 bis 2 Gew.-% Zinn in Form von Einheiten wenigstens einer Organozinnverbindung mit einer oder mehreren polymerisierbaren C=C-Bindungen,
(b) 0,5 bis 5 Gew.-% Einheiten von Acrylsäure, Methacrylsäure, Acrylamid, Methacrylsäure, Acrylamid, Methacrylamid und/oder Vinylsulfonsäure,
(c) 0,1 bis 5 Gew.-% Einheiten von Carbonylgruppen aufweisenden Monomeren, die mit Dihydraziden aliphatischer, 2 bis 10 Kohlenstoffatome enthaltender Dicarbonsäuren vernetzt sind,
   und
(d) die Differenz zu 100 Gew.-% an Einheiten von wenigstens zwei Monomeren aus der Gruppe der Acryl- und Methacrylsäureester von C₁- bis C₈-Alkanolen und Styrol in solcher Auswahl und in solchen Mengenverhältnissen, daß das Copolymerisat vor der Vernetzung eine Glastemperatur von -15 bis +10°C hat.

Ein Betondachstein dieser Art wird erfindungsgemäß so hergestellt, daß man auf wenigstens eine Oberfläche des "grünen" Dachsteins als Beschichtungsmasse eine wäßrige Zubereitung aufbringt, die
(A) ein dispergiertes Copolymerisat aus
   (A₁) 0,03 bis 2 Gew.-% (berechnet als Zinn) wenigstens einer Organozinnverbindung mit einer oder mehreren polymerisierbaren C=C-Bindungen,
   (A₂) 0,5 bis 5 Gew.-% Acrylsäure, Methacrylsäure, Acrylamid, Methacrylamid und/oder Vinylsulfonsäure,
   (A₃) 0,1 bis 5 Gew.-% wenigstens eines eine oder mehrere Carbonylgruppen aufweisenden Monomeren und
   (A₄) der Differenz zu 100 Gew.-% an wenigstens zwei Monomeren aus der Gruppe der Acryl- und Methacrylsäureester von C₁ bis C₈-Alkanolen und Styrol in solcher Auswahl und solchen Mengenverhältnissen, daß das Copolymerisat eine Glastemperatur von -15 bis +10°C hat,
(B) 0,2 bis 3 Gew.-% (bezogen auf trockenes Copolymerisat) wenigstens eines wasserlöslichen Dihydrazids einer aliphatischen, 2 bis 10 Kohlenstoffatome enthaltenden Dicarbonsäure.
(C) 1 bis 5 Gew.-% (bezogen auf trockenes Copolymerisat) wenigstens eines Emulgators aus der Gruppe der Fettalkoholsulfate und Fettalkoholethoxilate
   und
(D) bis zu 300 Gew.-% (bezogen auf trockenes Copolymerisat) an mineralischen Zuschlagstoffen und/oder Farbpigmenten enthält, die Zubereitung dann während der Heißhärtung des Betondachsteins zu einem Film trocknen läßt und gegebenenfalls nach der Heißhärtung eine weitere Schicht der Zubereitung aufbringt und ebenfalls zu einem Film trocknen läßt.

Zur Herstellung der Beschichtungsmasse geht man zweckmäßigerweise von einer wäßrigen Dispersion des Copolymerisats A aus, die eine Viskosität bei 23°C von 0,5 bis 2,5 Pa.s und vorzugsweise einen pH-Wert von etwa 8 hat.

Die Organozinnverbindungen der unter A₁ genannten Art sind bekannt oder nach bekannten Verfahren erhältlich. Als Beispiele für solche Verbindungen seien genannt: Tri-n-butylzinn-acrylat, Tri-n-butylzinn-methacrylat, Tri-cyclohexylzinn-methacrylat, Tri-cyclohexylzinn-acrylat, Tri-phenylzinn-acrylat, Triphenylzinn-methacrylat, Tri-n-propylzinn-acrylat, Tri-n-propylzinn-methacrylat, Tri-isopropylzinn-acrylat, Tri-isopropylzinn-methacrylat, Tri-sec.-butylzinn-acrylat, Tri-sec.-butylzinn-methacrylat, Tri-ethylzinn-acrylat, Tri-ethylzinn-methacrylat, Diethyl-butylzinn-acrylat, Diethyl-butylzinn-methacrylat, Diethylamylzinn-acrylat, Diethylamylzinn-methacrylat, Diamyl-methylzinn-acrylat, Diamyl-methylzinn-methacrylat, Propyl-butyl-amylzinn-acrylat, Propyl-butyl-amylzinn-methacrylat, Diethyl-phenylzinn-acrylat, Diethyl-phenylzinn-methacrylat, Ethyl-diphenylzinn-acrylat, Ethyl-diphenylzinn-methacrylat, n-Octyl-diphenylzinn-acrylat, n-Octyl-diphenylzinn-methacrylat, Diethyl-iso-octylzinn-acrylat, Diethyl-iso-octylzinn-methacrylat, Di-n-butylzinn-diacrylat, Di-n-butylzinn-dimethacrylat, Maleinsäure-(tripropylzinn)-mono- und -diester, Maleinsäure-(tricyclohexylzinn)-mono- und -diester, Maleinsäure-(triphenylzinn)-mono- und -diester, Maleinsäure-(tri-n-butylzinn)-mono- und -diester sowie die entsprechenden Mono- und Diester der Itacon- und Citraconsäure, Allyl-tri-n-butylzinn, Diallyl-di-n-butylzinn, Allyltricyclohexylzinn, Diallyl-dicyclohexylzinn, Allyl-triphenylzinn, Diallyl-diphenylzinn. Besonders wirksam sind diejenigen Organozinnverbindungen, die eine Acryl- oder Methacrylgruppe und drei an das Zinn gebundene Alkylgruppen mit 3 bis 6 Kohlenstoffatomen enthalten. Von diesen wird wegen seiner leichten Zugänglichkeit das Tri-n-butylzinn-methacrylat bevorzugt.

Die Organozinnverbindungen sind mit ihrer oder ihren C=C-Doppelbindungen in die Polymerisate A in solcher Menge einpolymerisiert, daß der Gehalt der Polymerisate 0,03 bis 2 Gew.-%, vorzugsweise 0,3 bis 1 Gew.-% an Zinn beträgt.

Die unter A₂ genannten Monomeren können , soweit sie Carboxyl- oder Sulfonsäuregruppen tragen, in den Copolymerisaten A in Form der freien Säuren oder in ganz oder teilweise neutralisierter Form, insbesondere in Alkali- oder Ammoniumsalzform vorliegen.

Carbonylgruppen aufweisende Monomere A₃ sind Monomere mit mindestens einer Aldo- oder Keto-Gruppe und einer polymerisierbaren Doppelbindung. Von besonderem Interesse sind Acrolein, Diacetonacrylamid, Formylstyrol, Vinylalkylketone mit vorzugsweise 4 bis 7 C-Atomen, wie besonders Vinylmethylketon, Vinylethylketon und Vinylisobutylketon und/oder (Meth)acryloxy-alkylpropanale der allgemeinen Formel 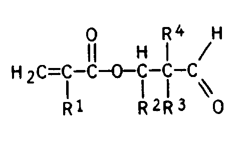
in der R¹ für -H oder CH₃, R² für -H oder einen 1 bis 3 C-Atome enthaltenden Alkylrest, R³ für einen 1 bis 3 C-Atome enthaltenden Alkylrest und R⁴ für einen 1 bis 4 C-Atome enthaltenden Alkylrest stehen. Derartige (Meth)acryloxyalkylpropanale können nach dem Verfahren der deutschen Patentanmeldung P 27 22 097.9 durch Veresterung von β-Hydroxyalkylpropanalen der allgemeinen Formel 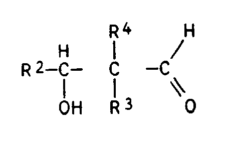
in der R², R³ und R⁴ die oben angegebene Bedeutung haben, in Gegenwart von indifferenten Verdünnungsmitteln sowie geringen Mengen Sulfonsäuren und Mineralsäuren bei Temperaturen von 40 bis 120, insbesondere von 60 bis 90° hergestellt sein. Als Ketogruppen tragende Monomere kommen ferner Diacetonacrylat, Acetonylacrylat, Diaceton(meth)acrylat, 2-Hydroxypropylacrylatacetylacetat, Butandiol-1,4-acrylatacetylacetat und 2-Ketobutyl(meth)acrylat in Frage. Die Menge der Carbonyl- bzw. Ketogruppen aufweisenden einpolymerisierten Comonomeren beträgt vorzugsweise 1 bis 4 Gew.-%, bezogen auf die Copolymerisate A.

Die Monomeren der unter A₄ genannten Gruppe liefern vom Gewicht her den weitaus größten Anteil an dem Copolymerisat A. Daher sind ihre Art und ihre Mengenverhältnisse überwiegend dafür verantwortlich, welche Glastemperatur ein Copolymerisat A hat. Die hier zu beachtenden Gesetzmäßigkeiten sind dem Fachmann bekannt. Sie seien daher hier nur in knapper Form skizziert: Man unterscheidet hartmachende und weichmachende Monomere. Die Ausdrücke "hartmachend" bzw. "weichmachend" bezeichnen solche Monomere, die in der Literatur gelegentlich ungenau als "hart" bzw. "weich" angegeben werden, d.h. solche Monomere, die für sich polymerisiert harte bzw. weichere Homopolymere ergeben. In diesem Sinne versteht man im allgemeinen unter hartmachenden Monomeren solche, deren Homopolymerisate Glastemperaturen von etwa 25 bis 120°C, unter weichmachenden Monomeren solche, deren Homopolymerisate Glastemperaturen von etwa -60 bis +25°C haben. Zwar gibt es bekanntermaßen fließende Übergänge zwischen diesen Monomerengruppen, doch sind für beide typische Vertreter bekannt.

Typische hartmachende Monomere sind z.B. Styrol, Methylmethacrylat und tert.-Butylacrylat. Von diesen werden im Rahmen der vorliegenden Erfindung Methylmethacrylat und Styrol bevorzugt.

Typische weichmachende Monomere sind z.B. Acryl- und Methacrylsäureester von 2 bis 8 Kohlenstoffatome enthaltenden, nichttertiären Alkanolen. Von diesen werden im Rahmen der vorliegenden Erfindung n-Butylacrylat, n-Butylmethacrylat und Ethylhexylacrylat bevorzugt.

Der Fachmann weiß, daß Copolymerisate, die weichmachende und hartmachende Monomere einpolymerisiert enthalten, Glastemperaturen haben, die zwischen denen der jeweiligen Homopolymerisate liegen. Er hat es daher in einfacher Weise in der Hand, durch Auswahl der Monomeren und ihrer Mengenverhältnisse vorgegebene Glastemperaturen einzustellen. Typische Kombinationen von Monomeren der unter A₄ genannten Art, deren Glastemperatur in dem erfindungsgemäß zu erreichenden Bereich liegen, sind z.B. (in Gew.-%):
- 65 % 2-Ethylhexylacrylat, 35 % Styrol,
- 55 % 2-Ethylhexylacrylat, 45 % Styrol
- 60 % 2-Ethylhexylacrylat, 20 % Methylmethacrylat, 20 % Styrol,
- 55 % 2-Ethylhexylacrylat, 35 % Butylmethacrylat, 10 % Styrol,
- 25 % Butylacrylat, 25 % 2-Ethylhexylacrylat, 50 % Styrol,
- 60 % Butylacrylat, 40 % Styrol,
- 30 % Butylacrylat, 30 % 2-Ethylhexylacrylat, 20 % Styrol, 20 % Methylmethacrylat,
- 35 % Butylacrylat, 30 % Methylmethacrylat, 35 % Butylmethacrylat.

Durch den zusätzlichen Einbau der unter A₁ bis A₃ genannten Monomeren werden die Glastemperaturen der Copolymerisate A ebenfalls beeinflußt. Daher muß gegebenenfalls eine Anpassung der oben angegebenen Mengenverhältnisse der Monomeren A₄ erfolgen.

Die Glastemperatur läßt sich nach üblichen Methoden, z.B. aus der Messung des E-Moduls im Kriechversuch als Funktion der Temperatur oder mit der Differentialthermoanalyse (DTA) bestimmen (s. dazu A. Zosel, Farbe und Lack 82 (1976), 125-134).

Die wäßrigen Dispersionen des Copolymerisats A können in an sich üblicher Weise durch Copolymerisation der Monomeren A₁ bis A₄ in wäßriger Emulsion unter Verwendung der üblichen Emulgier- und Dispergierhilfsmittel hergestellt sein und haben meist eine Konzentration an Copolymerisat A von 40 bis 60 Gew.-%. Als Emulgier- und Dispergiermittel enthalten sie meist 0,2 bis 3 Gew.-%, bezogen auf die Menge des Copolymerisats A, anionische und/oder nichtionische Emulgatoren, wie Natriumdialkylsulfosuccinate, Natriumsalze von sulfatierten ölen, Natriumsalze von Alkylsulfonsäuren, Natrium-, Kalium- und Ammoniumalkylsulfate, Alkalisalze von Sulfonsäuren, oxalkylierte C₁₂- bis C₂₄-Fettalkohole und oxalkylierte Alkylphenole, sowie ferner oxethylierte Fettsäuren, Fettalkohole und/oder Fettamide, oxethylierte Alkylphenole, ferner Natriumsalze von Fettsäuren, wie Natriumstearat und Natriumoleat. Vorzugsweise setzt man als Emulgatoren, Fettalkoholsulfate und Fettalkoholethoxilate ein, da diese biologisch besonders gut abbaubar sind. Man erhält so feinteilige Dispersionen, die sich für die Erfindung hervorragend eignen. Die mittlere Teilchengröße der erfindungsgemäßen Dispersionen liegt meist deutlich unter 100 nm. Eine typische Massenverteilung, bestimmt mit der analytischen Ultrazentrifuge (W. Maechtle, Makromolekulare Chemie, 185, (1984), s. 1025) ist
D₁₀ 60 nm,
D₅₀ 65 nm,
D₉₀ 70 nm.

Den Dispersionen der Copolymerisate A setzt man die Komponente (B), nämlich wenigstens ein wasserlösliches Dihydrazid einer aliphatischen, 2 bis 10, vorzugsweise 4 bis 6 Kohlenstoffatome enthaltenden Dicarbonsäure, zu, und zwar zweckmäßigerweise in einer Menge von 0,05 bis 1, vorzugsweise 0,4 bis 0,6 Mol je Mol der in den Copolymerisaten A enthaltenen Carbonylgruppen. Als Beispiele für Komponenten (B) seinen genannt: Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid und/oder Itaconsäuredihydrazid.

Die die Komponenten (B) enthaltenden Dispersionen von Copolymerisaten A bilden bei Raumtemperaturen glänzende, klare und zäh-flexible Filme, die nur wenig Wasser aufnehmen, nach 24-stündiger Wasserlagerung werden weniger als 10, meist weniger als 5 % gemessen. Sie sind frei von Weichmachern und von Filmbildemitteln.

Die Dispersionen neigen wenig zum Schäumen, für die Verarbeitung zu Beschichtungsmassen kann es jedoch vorteilhaft sein, Entschäumer einzusetzen. Gut geeignete Entschäumer sind beispielsweise Produkte auf Silikonbasis.

Die oben erwähnten Organo-Zinnverbindungen werden vollständig in die Polymerketten eingebaut, sie sind außerdem sehr hydrolysestabil. So kann man im Serum der Copolymer A-dispersionen Zinnkonzentrationen von etwa 1 ppm messen, unabhängig, ob 0,1 oder 5 % Organo-Zinnverbindung eingesetzt wurden.

Mit einer LC₅₀ (96 h, Salmo gairdneri RICH.) von über 1000 mg/l sind diese Polymerdispersionen akut untoxisch für Fische.

Dispersionen von Copolymerisaten A sind demnach günstiger einzustufen als solche, die als Biocidausrüstung gemäß dem Stand der Technik schwerlösliche Zinkdithiocarbamat- und/oder Benzimidazolderivate enthalten. Für diese liegt die LC₅₀ (Goldorfe) unter 500 mg/l.

Überraschenderweise verhindert schon die sehr niedrige Konzentration des sehr hydrolysenbeständig eingebauten Zinns den Bewuchs durch Algen, wie Chlorella vulgaris.

In bekannter Weise arbeitet man zur Herstellung von Beschichtungsmassen in die die Komponenten (B) enthaltenden Dispersionen der Copolymerisate A anorganische Füllstoffe und Farbpigmente ein und stellt die gewünschte Viskosität mit Wasser ein. Als anorganische Füllstoffe kommen z.B. in Betracht: Kreide, Quarzmehl und/oder Schwerspat.

Beispiele für Farbpigmente sind Eisenoxid-Rot- bzw. -Schwarzpigmente.

Nachstehend sei der prinzipielle Aufbau einer solchen Beschichtungsmasse angegeben:
40 % Polymerdispersion, der gegebenenfalls zusätzlich Emulgator gemäß (C) einverleibt worden ist
20 % Kreide
15 % Quarzmehl
5 % Eisenoxidpigment
ca. 20 % Wasser.

Die Pigmentvolumenkonzentration dieser Formulierung liegt bei etwa 45 %, die Viskosität bei 150 mPa.s (82 S⁻¹), gemessen nach DIN 53 018.

Der Betondachstein wird in üblicher Weise aus fertig gemischtem Beton durch ein Strangpreßverfahren hergestellt. Er erhält dabei bereits seine endgültige Form. Die Beschichtungsmasse bringt man in an sich bekannter Weise, vorzugsweise durch Sprühen, auf den ''grünen Dachstein", d.h. auf den noch nassen Beton, auf. Der Gesamtauftrag liegt bei ca. 300 g/m² (trocken). Der beschichtete Dachstein wird in eine sogenannte Kammer eingebracht. Dort wird in einem 6 bis 12 h dauernden Abbindeprozeß bei Temperaturen von 40 bis 65°C der Beton abgebunden und das Copolymerisat der Beschichtungsmasse verfilmt.

Nach diesem Prozeß wird der Dachstein vorzugsweise ein zweites Mal mit der Beschichtungsmasse besprüht. Die Trocknung erfolgt in einem Tunnelofen bei um 100°C liegenden Umlufttemperaturen. Tunnelofen und nachfolgende Abkühlstrecke sind so ausgelegt, daß eine vollständige Verfilmung stattfindet.

Die sehr gleichmäßigen Beschichtungen besitzen eine sehr gute Sperrwirkung gegen Calcium-Ionen. Sie zeigen nach der Wasserbadbehandlung keine Kalkausblühungen. Besonders überraschend ist die Langlebigkeit der Beschichtungen, die im Frost-Tau-Wechsel-Versuch ermittelt wird, einem in der Betondachsteinindustrie gebräuchlichen Verfahren zur Schnellbewitterung in Anlehnung an DIN 52 104. Die erfindungsgemäßen Dachsteine überstehen mindestens doppelt soviele, nämlich mindestens 1200, Frost-Tau-Wechsel ohne Beschädigungen wie die des Standes der Technik, bei denen man nach 300 bis 600 Frost-Tau-Wechseln mit Beschädigungen rechnen kann.

## Patentansprüche

1. Betondachstein, der auf wenigstens einer seiner Oberflächen mit einem gegebenenfalls mit Zuschlagstoffen und/oder Pigmenten gefüllten Film eines Copolymerisats überzogen ist, dadurch gekennzeichnet, daß das Copolymerisat folgende Monomereneinheiten einpolymerisiert enthält:
(a) 0,03 bis 2 Gew.-% Zinn in Form von Einheiten wenigstens einer Organozinnverbindung mit einer oder mehreren polymerisierbaren C=C-Bindungen,
(b) 0,5 bis 5 Gew.-% Einheiten von Acrylsäure, Methacrylsäure, Acrylamid, Methacrylamid und/oder Vinylsulfonsäure,
(c) 0,1 bis 5 Gew.-% Einheiten von Carbonylgruppen aufweisenden Monomeren, die mit Dihydraziden aliphatischer, 2 bis 10 Kohlenstoffatome enthaltender Dicarbonsäuren vernetzt sind, und
(d) die Differenz zu 100 Gew.-% an Einheiten von wenigstens zwei Monomeren aus der Gruppe der Acryl- und Methacrylsäureester von C₁- bis C₈-Alkanolen und Styrol in solcher Auswahl und in solchen Mengenverhältnissen, daß das Copolymerisat vor der Vernetzung eine Glastemperatur von -15 bis +10°C hat.

2. Betondachstein gemäß Anspruch 1, dadurch gekennzeichnet, daß er mit einem Copolymerisat überzogen ist, das als Einheiten einer Organozinnverbindung solche des Tri-n-butylzinn-methacrylats enthält.

3. Verfahren zur Herstellung eines Betondachsteins gemäß Anspruch 1, dadurch gekennzeichnet, daß man auf wenigstens eine Oberfläche des "grünen" Dachsteins eine wäßrige Zubereitung aufbringt, die
(A) ein dispergiertes Copolyerisat aus
(A₁) 0,03 bis 2 Gew.-% (berechnet als Zinn) wenigstens einer Organozinnverbindung mit einer oder mehreren polymerisierbaren C=C-Bindungen,
(A₂) 0,5 bis 5 Gew.-% Acrylsäure, Methacrylsäure, Acrylamid, Methacrylamid und/oder Vinylsulfonsäure,
(A₃) 0,1 bis 5 Gew.-% wenigstens eines eine oder mehrere Carbonylgruppen aufweisenden Monomeren und
(A₄) der Differenz zu 100 Gew.-% an wenigstens zwei Monomeren aus der Gruppe der Acryl- und Methacrylsäureester von C₁- bis C₈-Alkanolen und Styrol in solcher Auswahl und solchen Mengenverhältnissen, daß das Copolymerisat eine Glastemperatur von -15 bis +10°C hat,
(B) 0,2 bis 5 Gew.-% (bezogen auf trockenes Copolymerisat) wenigstens eines wasserlöslichen Dihydrazids einer aliphatischen, 2 bis 10 Kohlenstoffatome enthaltenden Dicarbonsäure.
(C) 1 bis 5 Gew.-% (bezogen auf trockenes Copolymerisat) wenigstens eines Emulgators aus der Gruppe der Fettalkoholsulfate und Fettalkoholethoxilate
und
(D) bis zu 300 Gew.-% (bezogen auf trockenes Copolymerisat) an mineralischen Zuschlagstoffen und/oder Farbpigmenten enthält, die Zubereitung dann während der Heißhärtung des Betondachsteins zu einem Film trocknen läßt und gegebenenfalls nach der Heißhärtung eine weitere Schicht der Zubereitung aufbringt und ebenfalls zu einem Film trocknen läßt.

4. Verfahren nach Anspruch 3, dadurch gekennzeichnet, daß man die Zubereitung in solcher Menge auf den Dachstein aufbringt, daß der Gesamtauftrag (trocken) 50 bis 300 g/m² beträgt.

## Claims

1. A concrete roof tile coated on at least one of its surfaces with an unfilled or aggregate- or pigment-filled film of a copolymer containing the following monomer units in copolymerized form:
(a) from 0.03 to 2% by weight of tin in the form of units of at least one organotin compound having one or more polymerizable C=C bonds,
(b) from 0.5 to 5% by weight of units of acrylic acid, methacrylic acid, acrylamide, methacrylamide and/or vinylsulfonic acid,
(c) from 0.1 to 5% by weight of units of carbonyl-containing monomers crosslinked with dihydrazides of aliphatic dicarboxylic acids of from 2 to 10 carbon atoms, and
(d) the difference to 100% by weight of units of at least two monomers selected from the group consisting of the acrylic and methacrylic esters of C₁-C₈-alkanols and styrene in such an amount and in such mixing ratios that the copolymer has a glass transition temperature of from -15 to +10°C prior to crosslinking.

2. A concrete roof tile as claimed in claim 1, coated with a copolymer in which the units of an organotin compound are those of tri-n-butyltin methacrylate.

3. A process for producing a concrete roof tile as claimed in claim 1, which comprises applying to at least one surface of the "green" roof tile an aqueous composition which contains
(A) a dispersed copolymer of
(A₁) from 0.03 to 2% by weight (calculated as tin) of at least one organotin compound having one or more polymerizable C=C bonds,
(A₂) from 0.5 to 5% by weight of acrylic acid, methacrylic acid, acrylamide, methacrylamide and/or vinylsulfonic acid,
(A₃) from 0.1 to 5% by weight of at least one monomer having one or more carbonyl groups
and
(A₄) the difference to 100% by weight of at least two monomers selected from the group consisting of the acrylic and methacrylic esters of C₁-C₈-alkanols and styrene in such an amount and in such mixing ratios that the copolymer has a glass transition temperature of from -15 to +10°C,
(B) from 0.2 to 5% by weight (based on dry copolymer) of at least one water-soluble dihydrazide of an aliphatic dicarboxylic acid of from 2 to 10 carbon atoms,
(C) from 1 to 5% by weight (based on dry copolymer) of at least one emulsifier selected from the group consisting of the fatty alcohol sulfates and fatty alcohol ethoxylates, and
(D) up to 300% by weight (based on dry copolymer) of mineral aggregates and/or color pigments, then, in the course of the high-temperature hardening of the concrete roof tile, drying the composition to leave a film and, optionally, after the high-temperature hardening, applying a further layer of the composition and again drying it to leave a film.

4. A process as claimed in claim 3, wherein the composition is applied to the roof tile in such an amount that the total addon (dry) is from 50 to 300 g/m².

## Revendications

1. Tuile de couverture en béton dont au moins l'une des surfaces est revêtue d'un film d'un copolymère, chargé éventuellement d'additifs et/ou de pigments, caractérisée en ce que le copolymère contient les unités monomériques suivantes, incorporées par polymérisation :
(a) 0,03 à 2% en poids d'étain, sous forme d'unités d'au moins un composé d'organoétain avec une ou plusieurs liaisons C=C,
(b) 0,5 à 5% en poids d'unités acide acrylique, acide méthacrylique, acrylamide, méthacrylamide et/ou acide vinylsulfonique,
(c) 0,1 à 5% en poids d'unités de monomères présentant des radicaux carbonyle, qui sont réticulées avec des dihydrazides d'acides dicarboxyliques aliphatiques contenant 2 à 10 atomes de carbone et
(d) la différence jusqu'à 100% en poids, d'unités d'au moins deux monomères appartenant au groupe des esters des acides acrylique et méthacrylique d'alcanols en C₁ à C₈ et du styrène, avec un choix tel et en proportions quantitatives telles que le copolymère possède, avant la réticulation, une température de transition vitreuse de -15 à +10°C.

2. Tuile de couverture en béton suivant la revendication 1, caractérisée en ce qu'elle est revêtue d'un copolymère qui contient, à titre d'unités d'un composé d'organoétain, des unités méthacrylate de tri-n-butylétain.

3. Procédé de fabrication d'une tuile de couverture en béton suivant la revendication 1, caractérisé en ce que l'on applique sur au moins une surface de la tuile de couverture à l'état "vert", une préparation aqueuse qui contient
(A) un copolymère dispersé de
(A₁) 0,03 à 2% en poids (calculés sous forme d'étain) d'au moins un composé d'organoétain avec une ou plusieurs liaisons C=C polymérisables,
(A₂) 0,5 à 5% en poids d'acide acrylique, d'acide méthacrylique, d'acrylamide, de méthacrylamide et/ou d'acide vinylsulfonique,
(A₃) 0,1 à 5% en poids d'au moins un ou plusieurs monomères présentant des radicaux carbonyle et
(A₄) la différence jusqu'à 100% en poids d'au moins deux monomères appartenant au groupe des esters de l'acide acrylique et de l'acide méthacrylique d'alcanols en C₁ à C₈ et du styrène en un choix tel et en proportions quantitatives telles que le copolymère possède une température de transition vitreuse de -15 à +10°C,
(B) 0,2 à 5% en poids (par rapport au copolymère sec) d'au moins un dihydrazide soluble dans l'eau d'un acide dicarboxylique aliphatique contenant de 2 à 10 atomes de carbone,
(C) 1 à 5% en poids (par rapport au copolymère sec) d'au moins un émulsif appartenant au groupe des sulfates d'alcools gras et des éthoxylates d'alcools gras
et
(D) jusqu'à 300% en poids (par rapport au copolymère sec) de pigments colorants et/ou d'additifs ou de granulats minéraux,
on laisse ensuite sécher la préparation, au cours du durcissement à chaud de la tuile de couverture en béton, en un film et on applique éventuellement après le durcissement à chaud, une couche supplémentaire de la préparation que l'on laisse également sécher en un film.

4. Procédé suivant la revendication 3, caractérisé en ce que l'on applique la préparation en une proportion telle sur la tuile de couverture que la proportion appliquée totale (à sec) varie de 50 à 300 g/m².
